# EUROPEAN PATENT APPLICATION

(11) **EP 2 820 984 A1**
(43) Date of publication of application: **07.01.2015**
(21) Application number: 13755290.7
(22) Date of filing: 17.01.2013
(51) Int. Cl.: A47J 36/16, A47J 27/00

(54) **HEATED COOKING UTENSIL AND ADAPTOR FOR HEATED COOKING UTENSIL**

(30) Priority: 28.02.2012 JP 2012042072
(71) Applicant: Watanabe Co. Ltd., Ehime 791-2120 (JP)
(72) Inventor: WATANABE, Hideki, Iyo-gun Ehime 7912120 (JP)
(74) Representative: Schaumburg, Thoenes, Thurn, Landskron, Eckert
(86) International application number: PCT/JP2013/050815
(87) International publication number: WO 2013/128967

(57) **Abstract**

[Problem] The present invention addresses the problem of reducing the burden on a cook of stirring the contents of a cooking utensil for heating a liquid. [Solution] J A cooking utensil for heating comprising a bottom surface and an essentially cylindrical side wall, wherein at least one protrusion and/or groove extending obliquely upward from below is formed on the inside surface of the side wall, whereby convection produced in the liquid as a result of said liquid being introduced into the cooking utensil for heating and being heated is slanted in an oblique direction on the inner surface of the side wall because of the projections or grooves, and the liquid is rotated in such a way as to swirl, and as a result the liquid can be stirred without the cook having to stir manually.

## Description

### Technical Field

The present invention relates to a cooking utensil for heating, into which a liquid such as water or soup is introduced for heating.

### Prior Art

It is often necessary to periodically or constantly stir the contents of cooking utensils such as saucepans into which water or soup is introduced for cooking. In this case, a cook conventionally stirs the contents using chopsticks or a ladle etc.

### Summary of the Invention

### Problem to be Solved by the Invention

However, stirring the contents of the cooking utensil, even periodically, is a burden for the cook, and the contents may boil over or may be unevenly heated etc. if the cook forgets to stir said contents.

The present invention has been devised in view of such a problem, and the problem addressed thereby lies in reducing the burden on a cook of stirring the contents of a cooking utensil for heating a liquid.

### Means for Solving the Problem

In order to solve the abovementioned problem, the present invention has the following features.

The invention described in claim 1 relates to a cooking utensil for heating having a bottom surface and an essentially cylindrical side wall, characterized in that at least one protrusion and/or groove extending obliquely upward from below is formed on the inside surface of the side wall. Moreover, the essentially cylindrical side wall includes a shape which expands toward the top and a shape which is rounded overall.

The invention described in claim 2 relates to an adapter for a cooking utensil for heating having a bottom surface and an essentially cylindrical side wall, which is fitted to said cooking utensil for heating, said adapter being characterized in that it comprises: a base part which engages with the inner surface or upper edge of the side wall; and at least one protrusion which is fixed to the base part and is formed in such a way as to extend obliquely upward from below along the inside surface of the side wall when the base part is engaged with the side wall.

### Advantage of the Invention

When a liquid is introduced into the cooking utensil for heating according to the invention described in claim 1 and is heated from below, the liquid attempts to move upward and convection is produced. In this instance, if heating is produced by a heating apparatus having a high temperature at the outer periphery, such as a gas stove, convection is produced in such a way that the liquid rises along the inner wall and drops down from the center, and if heating is produced by a heating apparatus having a high temperature in the center, such as an IH cooker, convection is produced in such a way that the liquid rises from the center and drops down along the inner wall. The protrusions and/or grooves are provided obliquely on the inner wall of the cooking utensil for heating according to the present invention, so the direction of advance of the liquid rising or falling along the inner wall due to convection is obliquely slanted due to the protrusions and/or grooves. That is to say, a force running in the circumferential direction of the inner wall is produced in the liquid at the inner wall part, and as a result the liquid is rotated in such a way as to flow in a swirl. This means that the liquid inside the utensil is rotated and stirred by heating energy alone, so it is possible to reduce the burden on the cook of stirring the liquid.

The invention described in claim 2 is fitted to a conventional cooking utensil for heating such as a saucepan, and can produce rotation in such a way that the contents flow in a swirl due to heating and convection, in the same way as in the invention described in claim 1.

### Brief Description of the Figures

[Fig. 1] is an oblique view of a cooking utensil for heating according to a mode of embodiment.
[Fig. 2] is a plan view showing the cooking state of the cooking utensil for heating according to a mode of embodiment.
[Fig. 3] is an oblique view of an adapter for a cooking utensil for heating according to a mode of embodiment, and a cooking utensil for heating in which said adapter is fitted.
[Fig. 4] is an oblique view of a variant example of an adapter for a cooking utensil for heating according to a mode of embodiment, and a cooking utensil for heating to which said adapter is fitted.

### Mode of Embodiment of the Invention

### (Mode of Embodiment 1)

A mode of embodiment of the present invention will be described below with reference to the figures.

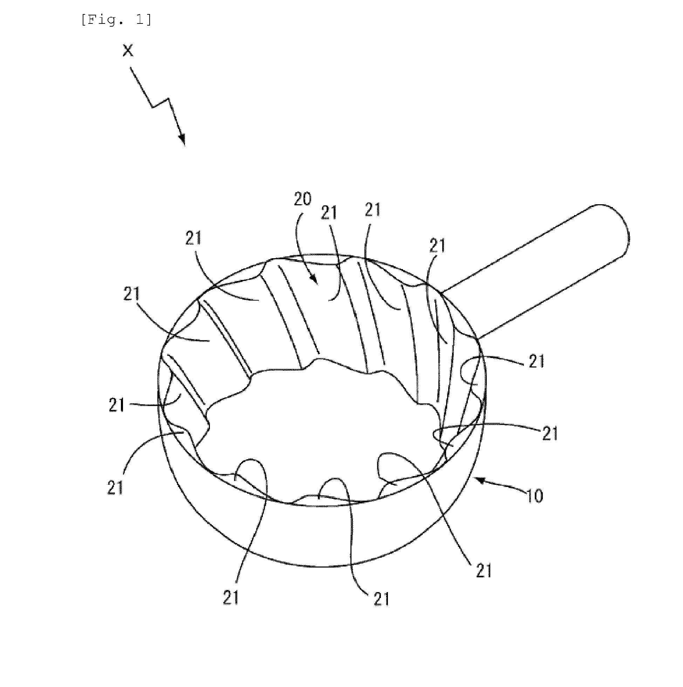

Fig. 1 shows an oblique view of a cooking utensil X for heating according to this mode of embodiment. The cooking utensil X for heating consists of: a main body 10 comprising a single-handled pot having an essentially cylindrical side wall 12 which is rounded overall on a flat bottom surface 11; and a rotation-imparting part 20 in which a plurality of protrusions provided along the inside of the side wall of the main body 10 are disposed at equal intervals around the inner circumference. Here, the main body 10 and the rotation-imparting part 20 are formed as a single piece from a ceramic.

Protrusions 21 which form the rotation-imparting part 20 have an essentially triangular cross section and are formed in such a way as to extend obliquely upward from below. Moreover, grooves extending obliquely upward from below in the same way are formed between adjacent protrusions 21.

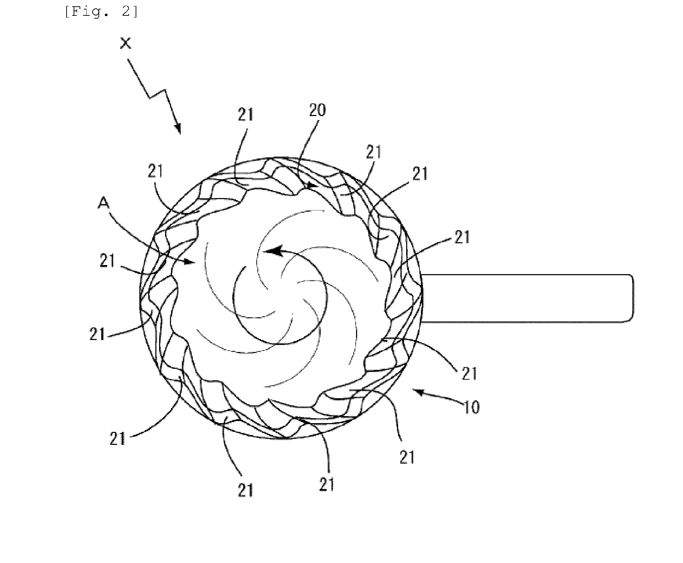

The method of using the cooking utensil X for heating having the abovementioned configuration and the action and advantage thereof will be described below. The method of use is the same as with a conventional saucepan, which is to say that a liquid such as water and an item to be cooked such as a foodstuff are introduced and heated on a gas stove or the like. Fig. 2 shows a plan view of the cooking utensil X for heating in a state in which a liquid has been introduced and is being heated. Liquid R inside the cooking utensil is heated from below, whereby convection rising along the inner wall and dropping down from the center is produced, or convection rising from the center and dropping down along the inner wall is produced. The direction of flow of the liquid R which flows along the inner wall is slanted in an oblique direction from the perpendicular direction by means of the protrusions 21 on the rotation-imparting part 20. As a result, when convection rising along the inner wall is produced, for example, a force producing rotation of the liquid R in the direction of the arrow A in the figure is produced at the outer circumference adjacent to the inner wall, and this force causes the liquid R to rotate in such a way as to describe a swirl. As a result, the liquid R is stirred by means of this rotation so the contents can be heated more uniformly and it is possible to limit occurrences of boiling over.

### (Mode of Embodiment 2)

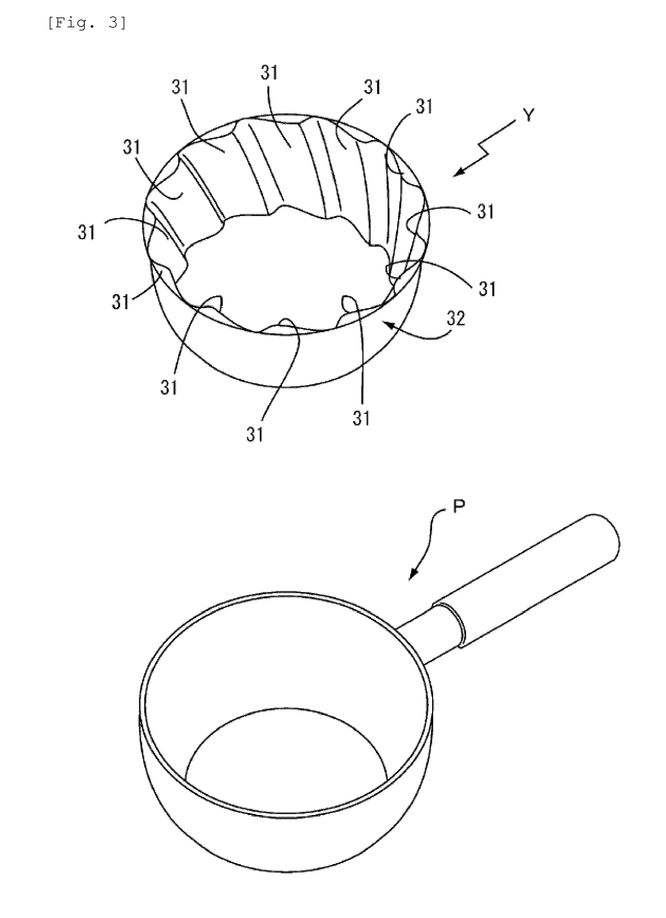

In Mode of Embodiment 1 described above, the rotation-imparting part 20 and the main body 10 are formed as a single piece, but in the present mode of embodiment they are formed as separate elements. Fig. 3 is an oblique exploded view of an adapter Y for a cooking utensil for heating, and a cooking utensil P for heating, in which the rotation-imparting part 20 is formed separately as the adapter Y for a cooking utensil for heating. The cooking utensil P for heating is a conventional metallic single-handed pot. The adapter Y for a cooking utensil for heating is an element in which a plurality of protrusions 31 extending obliquely upward from below are disposed on the inner circumferential surface of a base part 32 comprising a ring-shaped element having a size which can fit the inner wall of the cooking utensil P for heating. When the adapter Y for a cooking utensil for heating is fitted into the conventional cooking utensil P for heating, the same structure as the cooking utensil X for heating is formed, and liquid inside can be rotated by convection produced by heating.

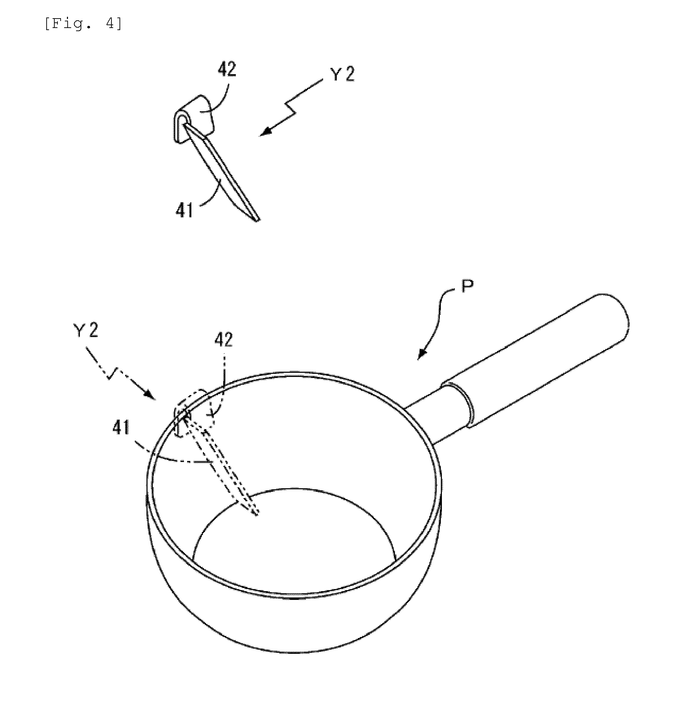

It should be noted that in this instance the base part is formed as a ring shape, but it is not necessarily essential to provide the base part around the whole circumference of the side wall of the cooking utensil P for heating, and a divided form is sufficient. A specific example is shown in fig. 4. Fig. 4 is an exploded oblique view of an adapter Y2 for a cooking utensil for heating in which only one protrusion is formed, and the cooking utensil P for heating. The cooking utensil P for heating is likewise a conventional metallic single-handed pot. The adapter Y2 for a cooking utensil for heating consists of: a base part 42 comprising a hook-like gripping element which fits onto the upper edge of the cooking utensil P for heating and fixes thereon; and a protrusion 41 which is formed by means of a plate element obliquely attached to the base part 42 in such a way as to extend obliquely upward from below. A single adapter Y2 for a cooking utensil for heating may be used, but a plurality of adapters Y2 for a cooking utensil for heating are normally fixed by fitting the base parts 42 thereof to the upper edge of the cooking utensil P for heating in such a way that suitable intervals are formed. As a result, the same structure as the cooking utensil X for heating is formed, and liquid inside can be rotated by convection produced by heating. It should be noted that various fixing systems may be employed for the base part 42, provided that such a system enables the protrusion to be fixed to the inside wall of the cooking utensil P for heating, and it is possible to use a magnet when the cooking utensil for heating is formed by a magnetic material, as well as a holding element on the adapter Y2 for a cooking utensil for heating.

### (Variant Example)

It should be noted that the cooking utensil X for heating is formed by a ceramic in Mode of Embodiment 1 described above, but it may be formed by another material such as a metal. When it is formed by a metal, the protrusions or grooves extending obliquely should be formed on the inside by machining in such a way that the whole of the side wall is wave-shaped. Furthermore, this kind of saucepan can be easily produced if it is formed by means of aluminum foil, and it can also serve as a disposable saucepan.

In many cases, grooves are naturally formed when protrusions are disposed around the circumference, but grooves may not be formed if the gaps between protrusions become larger. Furthermore, liquid can also be made to rotate by means of grooves extending obliquely, and protrusions may not be formed if the gaps between grooves become larger. In addition, the number of grooves or protrusions may be appropriately varied according to the required intensity of rotation, and a single protrusion or groove is sufficient for weak rotation.

Furthermore, the shape of the protrusions or grooves may be appropriately modified, for instance blade-like protrusions might be formed by thin sheets. Furthermore, the protrusions or grooves extending obliquely may extend obliquely in a curved shape as in the abovementioned modes of embodiment or they may extend in a straight line.

A single-handled pot was given as an example of a cooking utensil for heating in the modes of embodiment described above, but a cooking utensil which heats a liquid introduced therein may be appropriately used, and a two-handled pot or kettle, or a rice cooker or the like is equally feasible.

### Key to Symbols

- X: Cooking utensil for heating
- Y, Y2: Adapter for cooking utensil for heating
- 10: Main body
- 20: Rotation-imparting part
- 21, 31, 41: Protrusion
- 32, 42: Base part

## Claims

1. A cooking utensil for heating having a bottom surface and an essentially cylindrical side wall, **characterized in that** at least one protrusion and/or groove extending obliquely upward from below is formed on the inside surface of the side wall.

2. An adapter for a cooking utensil for heating having a bottom surface and an essentially cylindrical side wall, which is fitted to said cooking utensil for heating, said adapter being **characterized in that** it comprises:
a base part which engages with the inner surface or upper edge of the side wall; and
at least one protrusion which is fixed to the base part and is formed in such a way as to extend obliquely upward from below along the inside surface of the side wall when the base part is engaged with the side wall
